(19) Europäisches Patentamt / European Patent Office / Office européen des brevets

(11) **EP 4 317 354 A1**

(12) **EUROPEAN PATENT APPLICATION**
published in accordance with Art. 153(4) EPC

(43) Date of publication:
**07.02.2024 Bulletin 2024/06**

(21) Application number: **22779898.0**

(22) Date of filing: **09.03.2022**

(51) International Patent Classification (IPC):
***C09K 3/18*** *(2006.01)*     ***C23C 26/00*** *(2006.01)*

(52) Cooperative Patent Classification (CPC):
**C09K 3/18; C23C 26/00**

(86) International application number:
**PCT/JP2022/010378**

(87) International publication number:
**WO 2022/209675 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021058694**

(71) Applicant: **Nihon Parkerizing Co., Ltd.
Tokyo 103-0027 (JP)**

(72) Inventors:
• **OTSU, Yohei
Tokyo 103-0027 (JP)**
• **IKURA, Yuji
Tokyo 103-0027 (JP)**
• **MURAKAWA, Shoma
Tokyo 103-0027 (JP)**

(74) Representative: **Arnold & Siedsma
Bezuidenhoutseweg 57
2594 AC The Hague (NL)**

(54) **SURFACE TREATMENT AGENT FOR ALUMINUM-CONTAINING METAL MATERIALS**

(57) A surface treatment agent for aluminum-containing metal materials that is capable of forming a coating excellent in corrosion resistance and drainage property with suppressed odor is provided. A surface treatment agent for aluminum-containing metal materials, formulated with a resin (A) having an ethylene structural unit and a hydroxyethylene structural unit, an ether compound (B) having either one or both of an epoxy group and a hydroxyl group, and a metal compound (C), wherein a content of the ethylene structural unit in the resin (A) is 1 to 20 mol%.

EP 4 317 354 A1

**Description**

FIELD OF THE INVENTION

The present invention relates to a surface treatment agent for aluminum-containing metal materials, a method for producing a surface-treated metal material using the surface treatment agent, an aluminum-containing metal material provided with a surface treatment coating, and a heat exchanger.

BACKGROUND OF THE INVENTION

Conventionally, heat exchangers used in air conditioners for buildings and automobiles are often made of an aluminum-containing metal material due to their advantages in workability and thermal conductivity, etc., and in order to improve the heat exchange efficiency, the space between the aluminum-containing metal materials (generally called fins) in a ventilated area is designed to be very narrow. Moisture in the atmosphere may condense on the fins and condensation occurs when the air conditioner is operated (cooled), and the more hydrophobic the fin surface is, the bulkier the condensed water becomes, and as a result, clogging easily occurs between the fins. When clogging occurs, ventilation resistance increases, heat exchange efficiency decreases, and the ordinary performance of the heat exchanger cannot be obtained. In addition, clogging may increase noise during air blowing. In order to solve these problems, methods for imparting hydrophilicity to the aluminum-containing metal materials have been proposed and implemented.

For example, in Patent Literature 1 (Japanese Patent Application Publication No. 2016-222920), there is disclosed an aqueous resin dispersion with excellent dispersion stability, comprising EVOH (A), and a radical polymer (B) having a structural unit derived from a radically polymerizable carboxylic acid monomer (B1-1), wherein a content of the radical polymer (B) is 10 to 80% by mass with respect to a total content of the EVOH (A) and the radical polymer (B). Patent Literature 1 describes that a hydrophilizing agent containing this aqueous resin dispersion is preferably used for metals, especially aluminum and alloys thereof, and it is possible to form a hydrophilic coating that is excellent in hydrophilicity, especially in the persistence of hydrophilicity after contaminants adhere, and also excellent in adhesion, drainage property, and decontamination.

PRIOR ART

Patent Literature

[Patent Literature 1] Japanese Patent Application Publication No. 2016-222920

SUMMARY OF THE INVENTION

It is described that the aqueous resin dispersion described in Patent Literature 1 is excellent in dispersion stability. However, according to the results of studies by the present inventors, in more severe tests in anticipation of actual operating conditions of air conditioners, the hydrophilized coating formed using the hydrophilizing agent containing this aqueous resin dispersion could not obtain sufficient performance from the viewpoint of corrosion resistance, drainage property, and odor suppression.

The present invention has been created in view of the above circumstances, and in one embodiment, an object of the present invention is to provide a surface treatment agent for aluminum-containing metal materials that is capable of forming a coating excellent in corrosion resistance and drainage property with suppressed odor.

The inventors of the present invention have made intensive studies to solve the above problems, and have found that blending of the following resin (A), ether compound (B), and metal compound (C) is advantageous in obtaining a surface treatment agent for aluminum-containing metal materials capable of forming a coating excellent in corrosion resistance and drainage property with suppressed odor. The present invention has been thus completed.

The invention is exemplarily specified as follows.

[1] A surface treatment agent for aluminum-containing metal materials, formulated with a resin (A) comprising an ethylene structural unit and a hydroxyethylene structural unit, an ether compound (B) comprising either one or both of an epoxy group and a hydroxyl group, and a metal compound (C), wherein a content of the ethylene structural unit in the resin (A) is 1 to 20 mol%.

[2] The surface treatment agent according to [1], wherein when masses of the resin (A), the ether compound (B) and the metal compound (C) comprised in the surface treatment agent are represented by $M_A$, $M_B$ and $M_C$ respectively, they are formulated such that a relationship $M_A / (M_B + M_C) = 0.1$ to $3.0$ is satisfied.

[3] The surface treatment agent according to [1] or [2], wherein when masses of the ether compound (B) and the metal compound (C) comprised in the surface treatment agent are represented by $M_B$ and Me respectively, they are formulated such that a relationship $M_B / M_C$ =0.1 to 3.0 is satisfied.

[4] The surface treatment agent according to any one of [1] to [3], wherein the metal compound (C) is a silicon-containing oxide.

[5] A method for producing a surface-treated metal material, comprising:

a step of contacting the surface treatment agent according to any one of [1] to [4] with or above a surface of an aluminum-containing metal material, and
a step of drying the surface treatment agent after the step of contacting.

[6] An aluminum-containing metal material, comprising a surface treatment coating formed by contacting the surface treatment agent according to any one of [1] to [4] with or above a surface of the aluminum-containing metal material.

[7] A heat exchanger comprising the aluminum-containing metal material according to claim 6.

According to one embodiment of the invention, it is possible to provide a surface treatment agent for aluminum-containing metal materials capable of forming a coating excellent in corrosion resistance and drainage property with suppressed odor. Therefore, the present invention can contribute to improving the performance of, for example, a heat exchanger comprising an aluminum-containing metal material, particularly an air conditioner comprising an aluminum-containing metal material as a fin.

DETAILED DESCRIPTION OF THE INVENTION

Hereinafter, embodiments of the present invention including a surface treatment agent and a surface treated metal material are described in detail below. It should be noted that the present invention can be arbitrarily modified without departing from the spirit of the present invention, and it is not limited to the following embodiments. In addition, in the present specification, numerical ranges indicated by "to" also includes the upper limit and the lower limit. For example, "X to Y" means greater than or equal to X and less than or equal to Y.

< 1. Surface treatment agent>

According to one embodiment of the invention, there is provided a surface treatment agent for aluminum-containing metal materials, formulated with a resin (A) comprising an ethylene structural unit and a hydroxyethylene structural unit, an ether compound (B) comprising either one or both of an epoxy group and a hydroxyl group, and a metal compound (C), wherein a content of the ethylene structural unit in the resin (A) is 1 to 20 mol%.

[1-1. Resin (A)]

The resin (A) comprises an ethylene structural unit and a hydroxyethylene structural unit. The resin (A) is a kind of ethylene-vinyl alcohol copolymer (hereinafter referred to as "EVOH"). However, water solubility can be ensured when the content of the ethylene structural unit is 1 to 20 mol%. Being water-soluble provides the advantage of improved workability. As the resin (A), one type may be used alone, or two or more types may be used in combination. The lower limit of the content of ethylene structural units in the resin (A) is preferably 3 mol% or more, more preferably 5 mol% or more. The upper limit of the content of ethylene structural units in the resin (A) is preferably 17 mol% or less, more preferably 14 mol% or less. Accordingly, the content of ethylene structural units in the resin (A) is, for example, preferably 3 to 17 mol%, more preferably 5 to 14 mol%.

The content of ethylene structural units in the resin (A) (also referred to as "ethylene modification rate") can be measured by proton NMR. A specific measurement procedure is as follows. The resin (A) is added to deionized water and heated to 85 to 95 °C to dissolve. This is diluted with dimethyl sulfoxide (DMSO)-$d_6$ such that the concentration of the resin (A) becomes 1.0% by mass, and then used as an NMR sample. Proton NMR measurement is performed using a nuclear magnetic resonance spectrometer (for example, JNM-EX400 from JEOL Ltd.). The measurement is performed under the following conditions.

Measurement nuclide: 1H

Observation temperature: 25.1 °C

Each peak in the obtained spectrum is assigned as follows.

1.0 to 2.0 ppm: methylene protons of ethylene structural units and methylene protons of hydroxyethylene structural units

3.7 to 4.1 ppm: methine protons of hydroxyethylene structural units adjacent to at least one ethylene structural unit

4.1 to 4.5 ppm: methine protons of hydroxyethylene structural units not adjacent to an ethylene structural unit

According to the above assignment, assuming the integral value of 1.0 to 2.0 ppm is x, the integral value of 3.7 to 4.1 ppm is y, and the integral value of 4.1 to 4.5 ppm is z, the ethylene modification rate can be calculated by the following formula.

$$\text{Ethylene modification rate} = \{(x-2y-2z) / 4\} / \{y + z + (x-2y-2z) / 4\}$$

The upper limit of the weight average molecular weight of the resin (A) is preferably 100,000 or less, more preferably 80,000 or less, and even more preferably 50,000 or less. The lower limit of the weight average molecular weight of the resin (A) is preferably 1,000 or more, more preferably 5,000 or more, and even more preferably 10,000 or more. Accordingly, the weight average molecular weight of the resin (A) is, for example, preferably 1,000 to 100,000, more preferably 5,000 to 80,000, even more preferably 10,000 to 50,000. The weight average molecular weight of the resin (A) can be measured by the GPC method.

The lower limit of the degree of saponification of the resin (A) is preferably 90 mol% or more, more preferably 95 mol% or more. There is no particular upper limit for the degree of saponification of the resin (A), and it may be 100 mol %. The degree of saponification of the resin (A) is measured according to JIS K6726-1994.

The resin (A) can be produced according to a known EVOH production method, and is not particularly limited. For example, a method can be mentioned in which ethylene and vinyl ester are radically polymerized in a predetermined molar ratio to obtain an ethylene-vinyl ester copolymer, which is then saponified. As a vinyl ester, examples include vinyl formate, vinyl acetate, vinyl propionate, vinyl butyrate, vinyl isobutyrate, vinyl pivalate, vinyl versatate, vinyl caproate, and the like. Among these, vinyl acetate is preferred.

[1-2. Ether compound (B)]

The ether compound (B) has either one or both of an epoxy group and a hydroxyl group. The ether compound (B) plays a role as a binder, and can improve the durability of the coating by suppressing the runoff of the resin (A). As the ether compound (B), although it is not limited, mention can be made to, polyalkylene glycol, polyalkylene glycol alkyl ether, carbohydrates having a pyranose structure or furanose structure, glycidoxy group-containing silane compounds, and glycidyl ether compounds, and the like. As the ether compound (B), one type may be used alone, or two or more types may be used in combination.

As the polyalkylene glycol, mention can be made to polyethylene glycol and polypropylene glycol, and the like. As the polyalkylene glycol alkyl ether, mention can be made to polyethylene glycol (mono) methyl ether, poly (ethylene, propylene) glycol (mono) methyl ether, polyethylene glycol (mono) ethyl ether, and the like.

As the carbohydrates having a pyranose structure or a furanose structure, mention can be made to polysaccharides such as starch, glycogen, cellulose, chitin, dextran and derivatives thereof. When a cellulose derivative is mentioned as the polysaccharide derivative, examples include alkyl cellulose such as methyl cellulose (MC); hydroxyalkyl cellulose such as hydroxypropyl cellulose (HPC), hydroxyethyl cellulose (HEC); hydroxyalkylalkylcelluloses such as hydroxypropylmethylcellulose (HPMC), hydroxyethylmethylcellulose (HEMC), hydroxyethylethylcellulose (HEEC); and carboxymethyl cellulose sodium salt (CMC-Na).

As the glycidoxy group-containing silane compound, mention can be made to 3-glycidoxypropylmethyldimethoxysilane, 3-glycidoxypropyldimethylmethoxysilane, 3-glycidoxypropyltrimethoxysilane, 3-glycidoxypropylethyldiethoxysilane, 3-glycidoxypropyldiethylethoxysilane, 3-glycidoxypropyltriethoxysilane, and the like.

As the glycidyl ether compound, mention can be made to sorbitol polyglycidyl ether, glycerol polyglycidyl ether, diglycerol polyglycidyl ether, polyglycerol polyglycidyl ether, trimethylolpropane polyglycidyl ether, ethylene glycol diglycidyl ether, polyethylene glycol diglycidyl ether, propylene glycol diglycidyl ether, polypropylene glycol diglycidyl ether, ethylene oxide-containing phenol-based glycidyl ether, ethylene oxide-containing lauryl alcohol-based glycidyl ether, bisphenol A type epoxy resin, bisphenol F type epoxy resin, and bisphenol AD type epoxy resin, and the like.

[1-3. Metal compound (C)]

The metal compound (C) plays a role as an inhibitor that suppresses the progress of corrosion in various environments, and by being mixed in the coating, it is possible to ensure excellent corrosion resistance over a long term. Examples of such metal compounds (C) include compounds containing at least one metal selected from Si, Ti, V, Cr, Mn, Co, Zn, Zr, Mo, Ce and W. Among these, compounds containing at least one metal selected from Si, Ti, V and Zr are preferable, and silicon compounds are more preferable. The metal compound (C) can take the form of oxides, hydroxides, fluorides, chlorides, carbonates, nitrates, sulfates, acetates, phosphates, organic acid salts, and the like, and there is no particular limitation on the type. It should be noted that, in the present specification, Si is also treated as a metal. As the metal compound (C), one type may be used alone, or two or more types may be used in combination.

As the silicon compounds, mention can be made to, for example, silicon dioxide and its hydrates, silicates, and silicon-containing oxides such as organoalkoxysilanes. Silicon dioxide can be suitably used in the form of fumed silica (also referred to as "gas phase silica") which is silica fine particles synthesized by vaporizing silicon chloride and reacting in a gas phase in a high temperature hydrogen flame. In addition, silicon dioxide can be preferably used in the form of colloidal silica obtained by allowing dilute hydrochloric acid to act on silicate and then dialyzing.

Examples of silicates include those represented by $M_2O \cdot nSiO_2$ (n is 1 to 8 and M is Na, K, Li or $NH_4$).

Organoalkoxysilanes have alkoxysilane groups. This alkoxysilane group hydrolyzes upon contact with water to form a silanol group (Si-OH), which is then crosslinked to form a siloxane compound.

As the titanium compounds, mention can be made to titanium oxide, titanium hydrofluoric acid and salts thereof (potassium salt, ammonium salt, and the like), titanium sulfate and salts thereof (potassium salt, ammonium salt, and the like), titanyl sulfate, titanium acetylacetonate, titanium tetraacetylacetonate, titanium lactate, titanium triethanolamine, and the like As the vanadium compounds, mention can be made to vanadium pentoxide, metavanadates (sodium salt, potassium salt, ammonium salt, and the like), vanadium pentafluoride, vanadyl sulfate, vanadium acetylacetonate, vanadyl acetylacetonate, and the like.

As the chromium compounds, mention can be made to chromium oxide, bichromic acid and salts thereof (sodium salt, potassium salt, ammonium salt, and the like), chromium fluoride, chromium carbonate, chromium nitrate, chromium sulfate, chromium phosphate, chromium biphosphate, chromium acetylacetonate, and the like.

As the manganese compounds, mention can be made to manganese oxide, manganate (sodium salt, potassium salt, and the like), permanganic acid and salts thereof (sodium salt, potassium salt, calcium salt, barium salt, lithium salt, and the like), manganese carbonate, manganese nitrate, manganese phosphate, manganese hydrogen phosphate, manganese acetylacetonate, and the like. As the cobalt compounds, mention can be made to cobalt oxide, cobalt hydroxide, cobalt carbonate, cobalt nitrate, cobalt sulfate and salts thereof (potassium, ammonium salts, and the like), cobalt phosphate, cobalt pyrophosphate, cobalt acetylacetonate, and the like.

As the zinc compounds, mention can be made to zinc oxide, zinc hydroxide, zinc carbonate, zinc nitrate, zinc sulfate and salts thereof (potassium salt, ammonium salt, the like), zinc phosphate, zinc hydrogen phosphate, zinc acetylacetonate, and the like.

As the zirconium compounds, mention can be made to zirconium oxide, zirconium hydroxide, zirconium hydrofluoric acid and salts thereof (potassium salt, ammonium salt, and the like), zirconium oxychloride, zirconium hydroxychloride, ammonium zirconium carbonate, potassium zirconium carbonate, zirconium sulfate, zirconium nitrate, zirconium acetate, zirconium phosphate, sodium zirconium phosphate, zirconium propionate, zirconium monoacetylacetonate, zirconium bisacetylacetonate, zirconium tetraacetylacetonate, zirconium acetylacetonate bisethylacetoacetate, zirconium acetate, zirconium stearate, zirconium octoate, and the like.

As the molybdenum compounds, mention can be made to molybdenum oxide, molybdic acid and salts thereof (sodium, potassium, magnesium, ammonium salts, and the like), molybdenyl acetylacetonate, and the like.

As the cerium compounds, mention can be made to cerium oxide, cerium hydroxide, cerium chloride, cerium carbonate, ceric sulfate and its ammonium salt, cerium nitrate, ceric ammonium nitrate, cerium acetate, cerium phosphate, cerium octylate, cerium acetylacetonate, and the like. As the tungsten compounds, mention can be made to tungsten oxide, tungstic acid and salts thereof (sodium salt, potassium salt, magnesium salt, ammonium salt, and the like), and the like.

In addition, composite compounds of the above metals, such as zinc bichromate, zinc permanganate, cobalt tungstate, cerium tungstate, and the like, and pigments that are mixtures of oxides can also be used.

[1-4. Mixing ratio of resin (A), ether Compound (B) and metal compound (C)]

When the masses of the resin (A), the ether compound (B) and the metal compound (C) comprised in the surface treatment agent are represented by $M_A$, $M_B$ and Me respectively, it is preferable that they should be formulated such that $M_A / (M_B + M_C)$ is 0.1 or more, preferably 0.2 or more, and even more preferably 0.3 or more. In addition, the resin (A), the ether compound (B) and the metal compound (C) are preferably formulated such that $M_A / (M_B + Me)$ is 3.0 or less, more preferably 2.0 or less, and even more preferably 1.0 or less. Accordingly, the resin (A), the ether compound (B) and the metal compound (C) are preferably formulated such that, for example, a relationship $M_A / (M_B + M_C) = 0.1$ to 3.0 is satisfied, more preferably formulated such that a relationship $M_A / (M_B + M_C) = 0.2$ to 2.0 is satisfied, and even more preferably formulated such that a relationship $M_A / (M_B + Me) = 0.3$ to 1.0 is satisfied.

When the masses of the ether compound (B) and the metal compound (C) comprised in the surface treatment agent are represented by $M_B$ and $M_C$ respectively, they are preferably formulated such that $M_B / M_C$ is 0.1 or more, more preferably 0.2 or more, and even more preferably 0.3 or more. In addition, the ether compound (B) and the metal compound (C) are preferably formulated such that $M_B / M_C$ is 3.0 or less, more preferably 2.0 or less, and even more preferably 1.0 or less. Accordingly, the ether compound (B) and the metal compound (C) are preferably formulated such that, for example, a relationship $M_B / M_C = 0.1$ to 3.0 is satisfied, more preferably formulated such that a relationship $M_B / M_C = 0.2$ to 2.0 is satisfied, and even more preferably formulated such that a relationship $M_B / M_C = 0.3$ to 1.0 is satisfied.

[1-5. Other components]

The surface treatment agent may optionally contain various additives such as antibacterial agents, lubricants, surfactants, pigments, dyes, and inhibitors for imparting corrosion resistance. Further, the surface treatment agent preferably contains water or a mixed solvent of water and a water-miscible solvent in order to dissolve the resin (A). It is preferable to use deionized water as the water from the viewpoint of easy handling of the surface treatment agent. The water content is preferably 80 to 99% by mass, more preferably 85 to 95% by mass, based on the total amount of the surface treatment agent. When a mixed solvent of water and a water-miscible solvent is used, the proportion of water is preferably 60% by mass or more with respect to the total mass of the mixed solvent. The water-miscible solvent is not particularly limited as long as it does not undergo phase separation after being mixed with water, and examples thereof include alcohols such as methanol and ethanol.

[1-6. Producing method]

The surface treatment agent can be prepared, for example, by mixing each of the above components in a desired ratio, adding a required amount of water to the mixture, and stirring.

<2. Surface-treated metal material>

According to one embodiment of the invention, there is provided a method for producing a surface-treated metal material, comprising a step of contacting the above-described surface treatment agent with or above a surface of an aluminum-containing metal material, and a step of drying the surface treatment agent after the step of contacting. Further, an aluminum-containing metal material having a surface treatment coating can be obtained by this producing method. The ratios of the resin (A), the ether compound (B) and the metal compound (C) in the surface treatment coating is substantially the same as the ratios of the resin (A), the ether compound (B) and the metal compound (C) in the surface treatment agent. The aluminum-containing metal material having a surface treatment coating produced in this manner is useful for forming a fin material. Furthermore, this fin material is useful as a part of a heat exchanger.

[2-1. Aluminum-containing metal material]

The material constituting the aluminum-containing metal material may be pure aluminum, or may be an aluminum alloy.

[2-2. Cleaning step]

An untreated aluminum-containing metal material is preferably cleaned in advance with an acidic or alkaline cleaning agent. Examples of acidic cleaning agent to be used include acidic aqueous solutions containing at least one of nitric acid, sulfuric acid, and hydrofluoric acid. Examples of alkaline cleaning agent include alkaline aqueous solutions containing at least one of sodium hydroxide, sodium silicate, and sodium phosphate. A surfactant may be added to the alkaline aqueous solution in order to improve detergency. Methods for cleaning an aluminum-containing metal material include, for example, an immersion method and a spray method.

[2-3. Rust-preventing treatment]

A rust preventing treatment may be performed after the cleaning process. As methods for rust preventing treatment, chemical conversion treatment and underlayer antirust treatment using a resin primer can be mentioned. Among these, examples of chemical conversion treatment agent used for the chemical conversion treatment include conventionally known chromic acid chromate treatment agents, phosphoric acid chromate treatment agents and non-chromium treatment agents. Examples of resin primers include conventionally known water-soluble or water-dispersible water-based resins. Methods for rust preventing treatment of an aluminum-containing metal material include, for example, an immersion method and a spray method.

[2-4. Contacting step]

The method for bringing the surface treatment agent into contact with or above the surface of an aluminum-containing metal material is not particularly limited, but examples thereof include a dipping method, a spray, method, a roll coating method, and a brushing method. At this time, the temperature of the surface treatment agent can be about 10 to 50° C. The contact time can be about 3 seconds to 5 minutes.

[2-5. Drying step]

The method for drying the surface treating agent is not particularly limited as long as the water in the surface treating agent evaporates. For example, drying methods using known drying devices such as an oven, a batch-type drying furnace, a continuous hot-gas circulation drying furnace, a conveyor-type hot-gas drying furnace, an electromagnetic induction heating furnace using an IH heater, or the like can be mentioned. The drying temperature can be 100 to 250 °C, preferably 120 to 180 °C. The drying time can be 10 seconds to 120 minutes, preferably 1 to 60 minutes.

[2-6. Mass of surface treatment coating]

The mass of the surface treatment coating on the aluminum-containing metal material having the surface treatment coating is not particularly limited as long as it is an amount that can exhibit the effects of the present invention. However, it is preferably within the range of 0.01 to 5.0 g per m$^2$, more preferably within the range of 0.05 to 3.5 g per m$^2$, particularly preferably within the range of 0.1 to 2.0 g per m$^2$.

(Post-treatment step)

A post-treatment step may be carried out after forming the surface treatment coating. As the post-treatment step, mention can be made to a lubricating oil contact step or a lubricating coating forming step. More specifically, mention can be made to a step of bringing the surface treatment coating on/above the surface of the aluminum-containing metal material into contact with a lubricating oil, or bringing it into contact with a lubricant to form a lubricating coating. Thus, it is possible to obtain an aluminum-containing metal material having a multi-layer coating in which a lubricating oil is brought into contact with or a lubricating coating is formed on the surface treatment coating. In addition, the method of contacting the lubricating oil or lubricant is not particularly limited, but examples thereof include a roll coating method, a spray method, and an immersion method.
As the lubricating oil, publicly known ones used during forming processes can be used. Further, as the lubricant for forming a lubricating coating, for example, known lubricants such as water-soluble polyethers, polyethylene glycols, polyoxyethylene alkyl ethers, polyoxyethylene hydrogenated castor oil ethers can be used.

EXAMPLES

Hereinafter, the present invention will be described in more detail below based on examples, but the present invention is not limited to these examples.

<Production of resin (A)>

[Synthesis Example 1]

Into a 2L autoclave reactor equipped with a reflux condenser, a raw material feed inlet, a thermometer, a nitrogen inlet and a stirrer, 25 g of vinyl acetate and 120 g of methanol were added while introducing nitrogen gas, 25 ml of a 2% methanol solution of 2,2'-azobis(2,4-dimethylvaleronitrile) was added portionwise as an initiator. The ethylene pressure inside the autoclave was adjusted to 0.7 MPa, and the polymerization reaction was started at 60 °C. After 5 hours of reaction, unreacted vinyl acetate was removed under reduced pressure to prepare an ethylene-vinyl acetate resin methanol solution. To the obtained ethylene vinyl acetate resin methanol solution, a 10% aqueous sodium hydroxide solution was added such that the molar ratio of sodium hydroxide to vinyl acetate (25 g) used as the raw material was 0.01. Saponification was performed at 50 °C for 1 hour. Next, methanol was distilled off under reduced pressure, water was removed by centrifugation, and after drying, an ethylene-vinyl alcohol copolymer (resin (A)) powder having a degree of saponification of 98% was obtained. 5 g of the obtained powder was taken, put into 95 g of warm water of 85 to 95 °C, and heated and stirred for 2 to 3 hours to dissolve it all. The ethylene modification rate of the obtained powder was measured by proton NMR and found to be 10 mol%. The weight average molecular weight was determined to be 9000 by gel permeation chromatography (GPC). Each analysis was performed under the following conditions.

1) Proton NMR

The resulting sample was added to deionized water and heated to 85 to 95 °C to dissolve. This was diluted with dimethyl sulfoxide (DMSO)-d$_6$ such that the concentration of the resin (A) was 1.0% by mass, and it was used as an NMR sample. Proton NMR measurement was performed using a nuclear magnetic resonance spectrometer (JNM-EX400 from JEOL Ltd.). The measurement conditions and the method for calculating the ethylene modification rate are as described above.

2) GPC

Measurement was performed using a high-speed GPC device (HLC-8320GPC produced by Tosoh Corporation), and the weight average molecular weight was determined using a combination of an SEC column and a guard column. Measurement was performed under the following conditions.

SEC column: TSKgel Super AWM-H (produced by Tosoh Corporation)
Guard column: TSKguardcolumn SuperAW-H (produced by Tosoh Corporation)
Detector: RI (HLC-8320GPC built-in detector)
Standard sample: Polystyrene
Sample injection volume: 30 μL of 0.06% DMF solution
Flow rate: 0.5mL/min
Eluent: DMF/100 mM LiBr/60 mM H3PO4

[Synthesis Examples 2 to 8]

The resin (A) was synthesized in exactly the same manner as in Synthesis Example 1 except for the conditions shown in Table 1. The ethylene modification rate, molecular weight and degree of saponification of the obtained resins (A) are shown in Table 2. In addition, the obtained resins (A) are referred to as A1, A2, A3, etc. corresponding to the numbers of the Synthesis Examples. 5 g of each of the resins A1 to A6 thus obtained were put into 95 g of hot water of 85 to 95 °C and heated and stirred for 2 to 3 hours, and all dissolved. The resins A7 and A8 did not dissolve with the method described above.

[Synthesis Example 9]

The resin (A) was synthesized in exactly the same manner as in Synthesis Example 1 except for the conditions shown in Table 1. Pressurization during polymerization was performed with nitrogen (0.1 MPa) instead of ethylene. The ethylene modification rate, molecular weight and degree of saponification of the obtained resin (A) are shown in Table 2. 5 g of each resin A9 obtained was put into 95 g of warm water of 85 to 95 °C, and heated and stirred for 2 to 3 hours, and all dissolved.

Table 1

| Synthesis Example | Resin (A) | Vinyl acetate (g) | Methanol (g) | Initiator (mL) | Ethylene pressurization (MPa) |
|---|---|---|---|---|---|
| Synthesis Example 1 | A1 | 25 | 120 | 25 | 0.7 |
| Synthesis Example 2 | A2 | 100 | 50 | 70 | 0.1 |
| Synthesis Example 3 | A3 | 60 | 75 | 40 | 0.7 |
| Synthesis Example 4 | A4 | 25 | 90 | 30 | 1.5 |
| Synthesis Example 5 | A5 | 130 | 20 | 80 | 0.7 |
| Synthesis Example 6 | A6 | 145 | 8 | 100 | 0.6 |
| Synthesis Example 7 | A7 | 30 | 100 | 25 | 2.0 |
| Synthesis Example 8 | A8 | 30 | 100 | 25 | 3.0 |
| Synthesis Example 9 | A9 | 50 | 80 | 30 | 0.0 |

<Preparation of surface treatment agent>

Tables 2 to 4 show raw materials used for the surface treatment agents of Examples and Comparative Examples. Here, Table 2 is a list of the resins (A) used in Examples and Comparative Examples. Further, Table 3 is a list of the ether compounds (B) used in Examples and Comparative Examples. Further, Table 4 is a list of the metal compounds (C) used in Examples and

Comparative Examples.

Table 2

| Resin (A) | Ethylene modification rate (mol%) | Molecular weight | Degree of saponification (mol%) |
|---|---|---|---|
| A1 | 10 | 9000 | 98 |
| A2 | 2 | 66000 | 98 |
| A3 | 10 | 22000 | 98 |
| A4 | 18 | 9000 | 98 |
| A5 | 10 | 82000 | 98 |
| A6 | 7 | 110000 | 98 |
| A7 | 22 | 9000 | 98 |
| A8 | 32 | 9000 | 98 |
| A9 | 0 | 13000 | 98 |

Table 3

| Designation | Name of substance |
|---|---|
| B1 | Polyethylene glycol |
| B2 | Carboxymethylcellulose sodium |
| B3 | 3-glycidoxypropyltrimethoxysilane |
| B4 | Sorbitol polyglycidyl ether |

Table 4

| Designation | Name of substance |
|---|---|
| C1 | Gas phase silica |
| C2 | Colloidal silica |
| C3 | Ammonium zirconium carbonate |
| C4 | Vanadyl sulfate |

The surface treatment agents of Examples and Comparative Examples were prepared by mixing the resin (A), the ether compound (B), and the inorganic compound (C) so as to have a mass blending ratio shown in Table 5, and then by blending deionized water such that the total amount becomes 1000 g with respect to the solid content of 40 g of the obtained mixture, followed by stirring.

Table 5

| | (A) | | (B) | | (C) | | Total | Mass ratio | |
|---|---|---|---|---|---|---|---|---|---|
| | Type | mass | Type | mass | Type | mass | mass | (A)/ {(B)+(C)} | (B)/(C) |
| Example 1 | A1 | 40 | 81 | 30 | C1 | 30 | 100 | 0.7 | 1.0 |
| Example 2 | A2 | 40 | 81 | 30 | C1 | 30 | 100 | 0.7 | 1.0 |
| Example 3 | A3 | 40 | 81 | 30 | C1 | 30 | 100 | 0.7 | 1.0 |
| Example 4 | A4 | 40 | B1 | 30 | C1 | 30 | 100 | 0.7 | 1.0 |
| Example 5 | A5 | 40 | B1 | 30 | C1 | 30 | 100 | 0.7 | 1.0 |
| Example 6 | A6 | 40 | B1 | 30 | C1 | 30 | 100 | 0.7 | 1.0 |
| Example 7 | A1 | 40 | B2 | 30 | C1 | 30 | 100 | 0.7 | 1.0 |
| Example 8 | A1 | 40 | B3 | 30 | C1 | 30 | 100 | 0.7 | 1.0 |
| Example 9 | A1 | 40 | B4 | 30 | C1 | 30 | 100 | 0.7 | 1.0 |
| Example 10 | A2 | 40 | B2 | 30 | C2 | 30 | 100 | 0.7 | 1.0 |
| Example 11 | A2 | 40 | B2 | 30 | C3 | 30 | 100 | 0.7 | 1.0 |
| Example 12 | A2 | 40 | B2 | 30 | C4 | 30 | 100 | 0.7 | 1.0 |
| Example 13 | A3 | 10 | B3 | 10 | C2 | 80 | 100 | 0.1 | 0.1 |
| Example 14 | A3 | 25 | B3 | 25 | C2 | 50 | 100 | 0.3 | 0.5 |
| Example 15 | A3 | 60 | 83 | 10 | C2 | 30 | 100 | 1.5 | 0.3 |
| Example 16 | A3 | 20 | B3 | 50 | C2 | 30 | 100 | 0.3 | 1.7 |
| Example 17 | A3 | 75 | B3 | 10 | C2 | 15 | 100 | 3.0 | 0.7 |
| Example 18 | A3 | 20 | 83 | 60 | C2 | 20 | 100 | 0.3 | 30 |
| Example 19 | A3 | 80 | 83 | 10 | C2 | 10 | 100 | 4.0 | 1.0 |
| Example 20 | A3 | 20 | B3 | 65 | C2 | 15 | 100 | 0.3 | 4.3 |
| Comparative Example 1 | A7 | 30 | 81 | 30 | C1 | 40 | 100 | 04 | 0.8 |
| Comparative Example 2 | A8 | 30 | 81 | 30 | C1 | 40 | 100 | 0.4 | 08 |
| Comparative Example 3 | A9 | 30 | B1 | 30 | C1 | 40 | 100 | 0.4 | 0.8 |
| Comparative Example 4 | - | 0 | B1 | 40 | C1 | 60 | 100 | 0.0 | 0.7 |
| Comparative Example 5 | A1 | 40 | - | 0 | C1 | 60 | 100 | 0.7 | 0.0 |
| Comparative Example 6 | A1 | 40 | 81 | 60 | - | 0 | 100 | 0.7 | - |

<Preparation of test heat exchanger>

As a test heat exchanger, an aluminum heat exchanger (NB heat exchanger) for home air conditioners was used. Thereafter, the test heat exchanger was subjected to surface treatment under the following treatment conditions.

<Formation of surface treatment coating>

The test heat exchanger was immersed for 2 minutes in a treatment bath containing an alkaline degreasing agent "Fine Cleaner 4424" (produced by Nihon Parkerizing Co., Ltd.) at a concentration of 20 g/L at a bath temperature of 50 °C to remove the dust and oil adhering to the surface, the alkali content remaining on the surface was washed off with city water. Then, the test heat exchanger was subjected to dip-coating with the surface treatment agent according to each Example and Comparative Example. This test heat exchanger was then placed in a drying oven at a temperature of 150 °C for 20 minutes thereby forming a surface treatment coating on the surface of the test heat exchanger to prepare an evaluation sample. The mass of the surface treatment coating was adjusted to 0.8 g/m$^2$.

<Odor evaluation method>

After the evaluation sample prepared above was cooled to room temperature, it was immediately set in an air conditioner, and ON-OFF of cooling of the air conditioner was repeated four times. Each time, one panelist evaluated the odor at a distance of 10 to 20 cm from the air outlet of the air conditioner. At this time, the evaluation of the odor during air blowing with cooling ON and the evaluation during air blowing with cooling OFF was taken as the initial odor. After that, the evaluation sample was immersed in deionized water for 72 hours, dried in a blower dryer adjusted to 50 °C for 2 hours, and cooled to room temperature. The evaluation sample was then set in the air conditioner, and ON-OFF of cooling of the air conditioner was repeated four times. Each time, one panelist evaluated the odor at a distance of 10 to 20 cm from the air outlet of the air conditioner. At this time, the evaluation of the odor during air blowing with cooling ON and the evaluation during air blowing with cooling OFF was taken as the post-durability odor. The odor at each timing was evaluated according to the following evaluation criteria. As the evaluation criteria, the odor intensity of isovaleric acid, which is used as a standard odor of odorous components, at specified concentrations was used. The evaluation results of the four panelists were averaged, and if the evaluation standard value was 3 points or less, the odor was judged to be good. The results are shown in Table 6.

(Evaluation criteria)

5 points: strong odor (isovaleric acid concentration: 30 μg/L)
4 points: easily sensible odor (isovaleric acid concentration: 4 μg/L)
3 points: weak odor that makes it possible to identify the type of odor (cognition threshold: isovaleric acid concentration: 0.4 μg/L)
2 points: barely sensible odor (detection threshold: isovaleric acid concentration: 0.05 μg/L)
1 point: Odorless

<Drainage property evaluation method>

The evaluation sample prepared above was set in the air conditioner, the air conditioner was operated, and the amount of water retained in the evaluation sample (water retention amount) was confirmed when the air conditioner was operated for cooling for 30 minutes. The water retention amount was calculated by {(weight of evaluation sample after cooling - weight of evaluation sample after drying) / heat transfer area of evaluation sample}. It was evaluated that the smaller the amount of retained water was, the better the drainage was and the better the heat exchange efficiency was. The evaluation criteria for the water retention amount are shown below, and if the evaluation criteria value was 3 points or less, the drainage property was judged to be good. The evaluation sample was immersed in deionized water for 72 hours, dried in a blower dryer adjusted to 50 °C for 2 hours, and cooled to room temperature before use. The results are shown in Table 6.

(Evaluation criteria)

5 points: 70 g/m$^2$ or more
4 points: 60 g/m$^2$ or more and less than 70 g/m$^2$
3 points: 50 g/m$^2$ or more and less than 60 g/m$^2$
2 points: 40 g/m$^2$ or more and less than 50 g/m$^2$
1 point: less than 40 g/m$^2$

<Corrosion resistance evaluation method>

The evaluation sample prepared above was exposed for 720 hours according to a salt spray test method (JIS Z-2371), and the rust area of the fin portion (ratio of white rust area to the total area) was evaluated by visual observation. Evaluation criteria are shown below. Corrosion resistance was judged to be good if the evaluation standard value was 3 points or less. The results are shown in Table 6.

(Evaluation criteria)

5 points: white rust area is 70% or more
4 points: white rust area is 50% or more and less than 70%
3 points: white rust area is 30% or more and less than 50%
2 points: white rust area is 10% or more and less than 30%
1 point: white rust area is less than 10%

Table 6

| | Initial odor evaluation | | Post-durability odor evaluation | | Drainage property | Corrosion resistance |
|---|---|---|---|---|---|---|
| | Air conditioner cooling ON blowing air | Air conditioner cooling OFF blowing air | Air conditioner cooling ON blowing air | Air conditioner cooling OFF blowing air | | |
| Example 1 | 1.75 | 1.75 | 2.25 | 2.75 | 2 | 3 |
| Example 2 | 1.00 | 2 00 | 2.00 | 2.75 | 3 | 2 |
| Example 3 | 1.00 | 2.00 | 2.00 | 225 | 3 | 3 |
| Example 4 | 1.00 | 1.75 | 2.00 | 2.50 | 3 | 2 |
| Example 5 | 2.00 | 2.00 | 2.00 | 2.50 | 3 | 2 |
| Example 6 | 1.75 | 2.75 | 2.25 | 3.00 | 3 | 3 |
| Example 7 | 1.00 | 2,00 | 1.75 | 2.00 | 2 | 3 |
| Example 8 | 1.00 | 2.25 | 1.75 | 250 | 3 | 1 |
| Example 9 | 1.00 | 2.25 | 1.50 | 2.75 | 2 | 2 |
| Example 10 | 1.00 | 2.00 | 1.25 | 2.00 | 2 | 3 |
| Example 11 | 1.75 | 225 | 2.25 | 2.50 | 3 | 1 |
| Example 12 | 2.00 | 2.50 | 1.75 | 2.75 | 3 | 1 |
| Example 13 | 1.00 | 2.00 | 1.75 | 2.75 | 1 | 3 |
| Example 14 | 1.00 | 2.00 | 1.00 | 2.00 | 2 | 1 |
| Example 15 | 1.00 | 200 | 1.50 | 225 | 3 | 1 |
| Example 16 | 1.25 | 200 | 2.00 | 2.75 | 3 | 1 |
| Example 17 | 1.25 | 250 | 2.25 | 2.75 | 3 | 1 |
| Example 18 | 1.50 | 2.50 | 2.50 | 275 | 2 | 1 |
| Example 19 | 2.25 | 2.75 | 2.75 | 3.00 | 3 | 2 |
| Example 20 | 2.25 | 2.75 | 2.75 | 3.00 | 3 | 3 |
| Comparative Example 1 | 2.25 | 3.25 | 3.25 | 3.75 | 5 | 3 |
| Comparative Example 2 | 3.00 | 3.75 | 3.75 | 4.50 | 5 | 4 |
| Comparative Example 3 | 2.50 | 3.75 | 3.00 | 3.75 | 3 | 4 |
| Comparative Example 4 | 3.50 | 3.50 | 3.75 | 4.75 | 3 | 4 |
| Comparative Example 5 | 3.00 | 3.75 | 3.25 | 4.25 | 3 | 4 |

(continued)

| | Initial odor evaluation | | Post-durability odor evaluation | | Drainage property | Corrosion resistance |
|---|---|---|---|---|---|---|
| | Air conditioner cooling ON blowing air | Air conditioner cooling OFF blowing air | Air conditioner cooling ON blowing air | Air conditioner cooling OFF blowing air | | |
| Comparative Example 6 | 2.75 | 3.50 | 3.50 | 4.50 | 5 | 3 |

**Claims**

1. A surface treatment agent for aluminum-containing metal materials, formulated with a resin (A) comprising an ethylene structural unit and a hydroxyethylene structural unit, an ether compound (B) comprising either one or both of an epoxy group and a hydroxyl group, and a metal compound (C), wherein a content of the ethylene structural unit in the resin (A) is 1 to 20 mol%.

2. The surface treatment agent according to claim 1, wherein when masses of the resin (A), the ether compound (B) and the metal compound (C) comprised in the surface treatment agent are represented by $M_A$, $M_B$ and $M_C$ respectively, they are formulated such that a relationship $M_A / (M_B + M_C) = 0.1$ to 3.0 is satisfied.

3. The surface treatment agent according to claim 1 or 2, wherein when masses of the ether compound (B) and the metal compound (C) comprised in the surface treatment agent are represented by $M_B$ and Me respectively, they are formulated such that a relationship $M_B / M_C = 0.1$ to 3.0 is satisfied.

4. The surface treatment agent according to any one of claims 1 to 3, wherein the metal compound (C) is an oxide comprising silicon.

5. A method for producing a surface-treated metal material, comprising:

    a step of contacting the surface treatment agent according to any one of claims 1 to 4 with or above a surface of an aluminum-containing metal material, and
    a step of drying the surface treatment agent after the step of contacting.

6. = An aluminum-containing metal material, comprising a surface treatment coating formed by contacting the surface treatment agent according to any one of claims 1 to 4 with or above a surface of the aluminum-containing metal material.

7. A heat exchanger comprising the aluminum-containing metal material according to claim 6.

## INTERNATIONAL SEARCH REPORT

International application No.

**PCT/JP2022/010378**

### A. CLASSIFICATION OF SUBJECT MATTER

*C09K 3/18*(2006.01)i; *C23C 26/00*(2006.01)i
FI:  C23C26/00 A; C09K3/18

According to International Patent Classification (IPC) or to both national classification and IPC

### B. FIELDS SEARCHED

Minimum documentation searched (classification system followed by classification symbols)

C09K3/18; C23C26/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-222920 A (NIPPON PAINT SURF CHEMICALS CO., LTD.) 28 December 2016 (2016-12-28) | 1-7 |
| A | WO 2020/213554 A1 (KURARAY CO., LTD.) 22 October 2020 (2020-10-22) | 1-7 |
| A | JP 2011-161876 A (NIHON PARKERIZING CO., LTD.) 25 August 2011 (2011-08-25) | 1-7 |
| A | JP 9-316434 A (NIHON PARKERIZING CO., LTD.) 09 December 1997 (1997-12-09) | 1-7 |

☐ Further documents are listed in the continuation of Box C.    ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **17 May 2022** | **24 May 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

INTERNATIONAL SEARCH REPORT
Information on patent family members

International application No.

**PCT/JP2022/010378**

| Patent document cited in search report | | | Publication date (day/month/year) | Patent family member(s) | | | Publication date (day/month/year) |
|---|---|---|---|---|---|---|---|
| JP | 2016-222920 | A | 28 December 2016 | US | 2018/0134910 | A1 | |
| | | | | CN | 107709451 | A | |
| | | | | KR | 10-2018-0011209 | A | |
| | | | | MX | 2017015452 | A | |
| WO | 2020/213554 | A1 | 22 October 2020 | TW | 202100576 | A | |
| JP | 2011-161876 | A | 25 August 2011 | US | 2013/0034743 | A1 | |
| | | | | CN | 102844179 | A | |
| | | | | KR | 10-2012-0130213 | A | |
| | | | | BR | 112012020496 | A | |
| JP | 9-316434 | A | 09 December 1997 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016222920 A